# EUROPEAN PATENT APPLICATION

(11) **EP 3 267 719 A1**
(43) Date of publication of application: **10.01.2018**
(21) Application number: 17179982.8
(22) Date of filing: 06.07.2017
(51) Int. Cl.: H04W 24/10

(54) **WLAN MEASUREMENT IN MOBILE COMMUNICATIONS**

(30) Priority: 06.07.2016 US 201662358610 P
(71) Applicant: MediaTek Inc., Hsin-Chu 300 (TW)
(72) Inventor: LU, Tsung-Liang, 111, Shilin Dist., Taipei City (TW); CHEN, Chun-Pin, 330 Taoyuan City, Taoyuan Country (TW)
(74) Representative: 2K Patentanwälte Blasberg Kewitz & Reichel

(57) **Abstract**

Concepts and examples pertaining to enhancement for wireless local area network (WLAN) measurement in mobile communications, such as Evolved Universal Terrestrial Radio Access (E-UTRA), are described. A processor (260) of an electronic apparatus (250) receives a message from a network, with the message including a measurement object listing one or more WLANs associated with the electronic apparatus except for a first WLAN to which the electronic apparatus (250) is communicatively connected. The processor performs measurement of one or more aspects of the one or more WLANs and the first WLAN. The processor (260) also reports to the network a result of the measurement regarding the one or more WLANs and the first WLAN, even though the first WLAN was not listed in the measurement object received from the network.

## Description

### CROSS REFERENCE TO RELATED PATENT APPLICATION(S)

The present disclosure claims the priority benefit of U.S. Provisional Patent Application No. 62/358,610, filed 06 July 2016, the content of which is incorporated by reference in its entirety.

### TECHNICAL FIELD

The present disclosure is generally related to wireless communications and, more particularly, to enhancement for wireless local area network (WLAN) measurement in mobile communications.

### BACKGROUND

Unless otherwise indicated herein, approaches described in this section are not prior art to the claims listed below and are not admitted as prior art by inclusion in this section.

With the introduction of Long-Term Evolution (LTE)-wireless local area network (WLAN) aggregation (LWA), LTE-WLAN Radio Level Integration with IPsec tunnel (LWIP) and radio access network (RAN)-controlled LTE-WLAN Integration (RCLWI), a RAN-controlled WLAN measurement feature is introduced for the 3^{rd} Generation Partnership Project (3GPP) Rel-13 E-UTRA. The configuration mechanism involves re-using legacy measurement configuration mechanism through radio resource control (RRC) connection reconfiguration messages. Some potential issues, however, may exist within current measurement configuration mechanisms, which may lead to incorrect network-user equipment (NW-UE) interaction and mobility procedure.

The following is a description of a first potential issue.

In 3GPP Rel-13 and Rel-14 36.331 sub-clause 5.5.1, it is indicated that a UE should consider "the WLAN to which the UE is connected" as a listed cell, and perform inter-radio access technology (RAT) measurement. However, it is not specified that the NW should include "the WLAN to which the UE is connected" in any measurement object. Yet, in performing measurements according to Rel-13 and Rel-14 36.331 sub-clause 5.5.1, the UE is only required to perform measurement on the serving cells and neighboring cells indicated in the concerned measurement object. Such misalignment stems from the first time the listed cell may not be included in the measurement object. This may result in potential issues, as the UE following Rel-13 and Rel-14 36.331 sub-clause 5.5.1 in implementing measurement behaviors may not measure "the WLAN to which the UE is connected" in an event that "the WLAN to which the UE is connected" is not included in the measurement object.

The following is a description of a second potential issue.

In 3GPP Rel-13 and Rel-14 36.331, it is specified for event W2 and event W3 that the UE should consider that an event entering condition is met when "all WLAN inside WLAN mobility set becomes worse than threshold." However, it is not specified that the NW should configure "all WLAN inside WLAN mobility set" as part of the measurement objects/listed cells of the corresponding UE. This may result in potential issues, as the triggering of measurement events W2 and W3 should take the measurement results of all WLAN inside WLAN mobility set into consideration. In case that the NW only configures part of the WLAN in a mobility set in the measurement object, the UE may not measure the remaining WLAN(s) in the mobility set that is/are not included in the measurement object. Consequently, there may be a problem in the condition judgment result of the UE. For example, if there are three WLAN access points (AP), namely AP1, AP2 and AP3, in the mobility set, with only AP1 and AP2 configured in the measurement object, then the UE behavior on how to treat the measurement result of AP3 is not specified. As such, whether the conditions for entering and leaving should be judged by the UE under this circumstance is not specified.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to propose various novel concepts and schemes pertaining to enhancement for WLAN measurement in mobile communications (e.g., E-UTRA). Specifically, the present disclosure provides schemes, or proposed solutions, to address each of the aforementioned potential issues.

In one aspect, a method may involve a processor of an electronic apparatus receiving a message from a network. The message may include a measurement object listing one or more WLANs associated with the electronic apparatus except for a first WLAN to which the electronic apparatus is communicatively connected. The method may also involve the processor performing measurement of one or more aspects of the one or more WLANs and the first WLAN, even though the first WLAN was not included in the measurement object.

In one aspect, a method may involve a processor of an electronic apparatus receiving a message from a network. The message may include a measurement object listing one or more WLANs but not a first WLAN when the one or more WLANs and the first WLAN are in a mobility set associated with the electronic apparatus. The method may also involve the processor determining whether an event triggering condition is met based on one or more aspects of the one or more WLANs and the first WLAN.

In one aspect, a method may involve a processor of an electronic apparatus receiving a first message from a user equipment that identifies a first WLAN to which the user equipment is communicatively connected. The method may also involve the processor generating a measurement object listing the first WLAN and one or more WLANs associated with the user equipment. The method may further involve the processor transmitting to the user equipment a second message that includes the measurement object.

In one aspect, a method may involve a processor of an electronic apparatus determining a mobility set associated with a user equipment. The mobility set may include one or more WLANs and a first WLAN to which the user equipment is either communicatively connected or not connected. The method may also involve the processor generating a measurement object listing the one or more WLANs and the first WLAN. The method may further involve the processor transmitting to the user equipment a message that includes the measurement object.

It is noteworthy that, although description provided herein may be in the context of certain radio access technologies, networks and network topologies such as LTE, E-UTRA and WLAN (e.g., based on Wi-Fi according to the IEEE 802.11 standards), the proposed concepts, schemes and any variation(s)/derivative(s) thereof may be implemented in, for and by other types of radio access technologies, networks and network topologies. Thus, the scope of the present disclosure is not limited to the examples described herein.

### BRIEF DESCRIPTION OF THE DRAWINGS

The accompanying drawings are included to provide a further understanding of the disclosure, and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram of an example network environment in which various schemes in accordance with the present disclosure may be implemented.
FIG. 2 is a block diagram of an example apparatus in accordance with an implementation of the present disclosure.
FIG. 3 is a flowchart of an example method / process in accordance with an implementation of the present disclosure.
FIG. 4 is a flowchart of an example method / process in accordance with an implementation of the present disclosure.
FIG. 5 is a flowchart of an example method / process in accordance with an implementation of the present disclosure.
FIG. 6 is a flowchart of an example method / process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

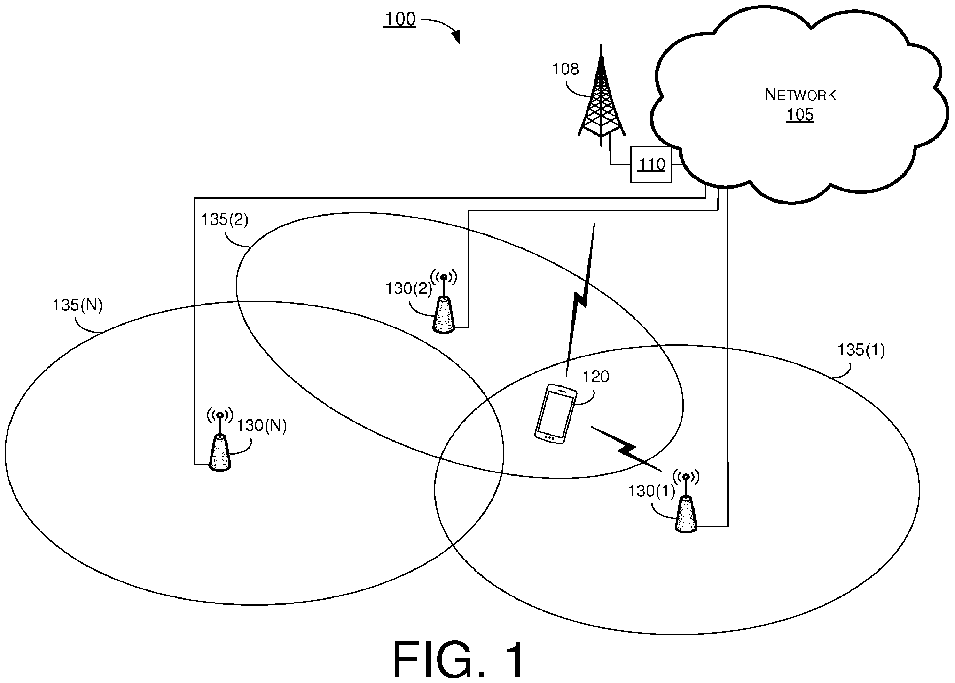

FIG. 1 illustrates an example network environment 100 in which various schemes in accordance with the present disclosure may be implemented. Network environment 100 may involve a network 105 having one or more network nodes such as a network node 110 with an associated ratio tower 108. Network environment 100 may also involve a user equipment (UE) 120 and multiple WLANs such as WLANs 135(1) - 135(N), with N being a positive integer greater than 1. Each of WLANs 135(1) - 135(N) may be associated with a respective access point (AP) of APs 130(1) - 130(N). UE 120 may be in wireless communication with or otherwise communicatively connected to network 105 via network node 110 and radio tower 108. UE 120 may also be in wireless communication with or otherwise communicatively connected to one of WLANs 135(1) - 135(N) such as WLAN 135(1). For illustrative purposes and without limitation, WLANs 135(1) - 135(N) may constitute a WLAN mobility set such that APs 130(1) - 130(N) may autonomously enable mobility for UE 120 without informing network node 110.

Network 105 may include a wireless network such as a LTE-related network (e.g., a LTE network, a LTE-Advanced network or a LTE-Advanced Pro network). That is, network 105 may communicate with UE 120 using a first radio access technology (RAT) such as LTE for example. In some implementations, network 105 may also include one or more other types of wireless and/or wired networks that, together, form network 105. Each of WLANs 135(1) - 135(N) may be a WLAN based on, for example and without limitation, one or more of the Institute of Electrical and Electronics Engineers (IEEE) 802.11 standards. That is, each of WLANs 135(1) - 135(N) may communicate with UE 120 using a second RAT such as Wi-Fi for example.

Network environment 100 may be an example and simplified illustration of an implementation of Long-Term Evolution (LTE) and Wi-Fi aggregation (LWA), LTE-WLAN aggregation with IPsec tunnel (LWIP) and radio access network (RAN)-controlled LTE and WLAN interworking (RCLWI). Moreover, RAN-controlled WLAN measurement feature introduced for the 3GPP Rel-13 E-UTRA may be implemented in network environment 100. Accordingly, RRC connection reconfiguration messages may be utilized by network node 110 and UE 120 as a configuration mechanism.

Regarding the aforementioned first potential issue that the NW does not include "the WLAN to which the UE is connected" in any measurement object, the present disclosure proposes two schemes - namely, a first scheme and a second scheme - to address the issue as described below with reference to network environment 100.

The first scheme may involve procedural enhancement to avoid the potential issue. Under the first scheme, the behavior of network 105/network node 110 may be specified in the 3GPP specification such that network 105/network node 110 should ensure that "the WLAN to which the UE is connected" is always included in at least one of the measurement objects provided by network node 110 to UE 120. In some cases, when the WLAN APs (e.g., APs 130(1) - 130(N) of WLANS 135(1) - 135(N)) are physically spread out and in more than one measurement object, each measurement object may be associated with a corresponding measurement identifier (ID). The corresponding measurement ID should also be configured for measurement.

It is noteworthy that, while the first scheme may require the least amount or no effort on the part of UE 120, the first scheme would require modification to the 3GPP specification as well as the behavior of network 105/network node 110. Additionally, in case network 105/network node 110 does not follow the specification and only configures some but not all WLANs (e.g., WLANs 135(1) - 135(N)) in the WLAN mobility set as measurement objects, UE 120 may still need some workaround to deal with error handling, such as the second scheme.

Under the second scheme, UE 120 may not only consider the un-configured "the WLAN to which UE 120 is connected" (e.g., WLAN 135(1)) as a listed cell in the measurement object, but UE 120 may also perform WLAN measurement and reporting for "the WLAN to which UE 120 is connected" by UE 120 itself, even if "the WLAN to which UE 120 is connected" is not included in any measurement object by network node 110. This new UE behavior is currently not specified in the 3GPP 36.331 sub-clause 5.5.3. With UE 120 configured to carry out the second scheme, UE 120 may obtain the intended measurement result of "the WLAN to which UE 120 is connected" and, thus, may include the measurement result in its measurement report to network node 110. In some cases, when the WLAN APs (e.g., APs 130(1) - 130(N) of WLANS 135(1) - 135(N)) are physically spread out and in more than one measurement object, each measurement object may be associated with a corresponding measurement ID. The corresponding measurement ID should also be configured for measurement.

Regarding the aforementioned second potential issue that network node 110 does not configure all WLANs in the WLAN mobility set as measurement objects/listed cells, the present disclosure proposes four schemes - namely, a third scheme, a fourth scheme, a fifth scheme and a sixth scheme - to address the issue as described below with reference to network environment 100.

The third scheme may involve procedural enhancement to avoid the potential issue. Under the third scheme, the behavior of network 105/network node 110 may be specified in the 3GPP specification such that network 105/network node 110 should ensure that "all WLANs in the WLAN mobility set" are configured as measurement objects (or listed cells). In some cases, when the WLAN APs (e.g., APs 130(1) - 130(N) of WLANS 135(1) - 135(N)) are physically spread out and in more than one measurement object, each measurement object may be associated with a corresponding measurement ID. The corresponding measurement ID should also be configured for measurement.

It is noteworthy that, while the third scheme may require the least amount or no effort on the part of UE 120, the third scheme would require modification to the 3GPP specification as well as the behavior of network 105/network node 110. Moreover, in case network 105/network node 110 does not follow the specification and only configures some but not all WLANs in the WLAN mobility set as measurement objects, UE 120 may still need some workaround to deal with error handling, such as the fourth scheme, the fifth scheme and/or the sixth scheme.

Under the fourth scheme, UE 120 may only consider the WLANs in the WLAN mobility set that are configured as measurement objects (listed cells) (e.g., WLANs 135(2) - 135(N) but not WLAN 135(1)) when deciding whether to trigger a measurement event. It is noteworthy that such modified UE behavior is currently not specified in the 3GPP 36.331 sub-clause 5.5.4. In case there is any WLAN in the mobility set but not included in any measurement object by network node 110 (e.g., WLAN 135(1)), UE 120 would not take the measurement result of such non-measured WLAN(s) in its determination of event triggering. In some cases, when the WLAN APs (e.g., APs 130(1) - 130(N) of WLANS 135(1) - 135(N)) are physically spread out and in more than one measurement object, each measurement object may be associated with a corresponding measurement ID. The corresponding measurement ID should also be configured for measurement.

On the other hand, with the modified behavior, UE 120 may make consistent determination regarding the triggering of measurement events. Nevertheless, one potential side effect is that it is possible the measurement result of the non-measured WLAN is good, and the condition for triggering measurement event W2 and/or measurement event W3 should not be considered met. Conversely, it is also possible that the measurement result of the non-measured WLAN is not good, and the condition for triggering measurement event W2 and/or measurement event W3 should be considered met.

Under the fifth scheme, UE 120 may use a predefined default value for those WLANs in the mobility set but not configured as measurement objects by network node 110 (e.g., any of WLANs 135(1) - 135(N)) and, thus, may perform WLAN measurement and reporting UE 120's determination on whether to trigger measurement event W2 and/or W3. In some implementations, the predefined default vale may be set at a high value so that the condition for triggering measurement event W2 and/or measurement event W3 would be considered hard to be met. Alternatively, the predefined default vale may be set at a low value so that the condition for triggering measurement event W2 and/or measurement event W3 would be considered easy to be met.

It is noteworthy that such modified UE behavior is currently not specified in the 3GPP 36.331 sub-clause 5.5.4. With the modified behavior, UE 120 may make consistent determination regarding triggering of measurement event W2 and/or W3. Nevertheless, one potential side effect is that it is possible the measurement result of the non-measured WLAN is good, and the condition for triggering measurement event W2 and/or measurement event W3 should not be considered met. Conversely, it is also possible that the measurement result of the non-measured WLAN is not good, and the condition for triggering measurement event W2 and/or measurement event W3 should be considered met.

Under the sixth scheme, UE 120 may self-consider any un-configured WLAN (e.g., any of WLANs 135(1) - 135(N)) that is in the WLAN mobility set as a measurement object (listed cell) and, thus, may perform WLAN measurement and reporting UE 120's determination on whether to trigger measurement event W2 and/or W3, even though one or more of the WLANs in the WLAN mobility set is/are not configured as measurement object(s) by network node 110. In some cases, when the WLAN APs (e.g., APs 130(1) - 130(N) of WLANS 135(1) - 135(N)) are physically spread out and in more than one measurement object, each measurement object may be associated with a corresponding measurement ID. The corresponding measurement ID should also be configured for measurement.

It is noteworthy that such modified UE behavior is currently not specified in the 3GPP 36.331 sub-clause 5.5.4. With the modified behavior, even though one or more of the WLANs (e.g., WLANs 135(1) - 135(N)) in the WLAN mobility set is/are not configured as measurement object(s) by network node 110, UE 120 may still perform WLAN measurement on such un-configured WLAN(s) (e.g., any of WLANs 135(1) - 135(N)) and perform event triggering determination based on the measurement result. Advantageously, by performing the aforementioned procedure under the sixth scheme, UE 120 may obtain the intended measurement result of all WLANs in the WLAN mobility set. This allows UE 120 to make consistent decision regarding the triggering of measurement events.

### Illustrative Implementations

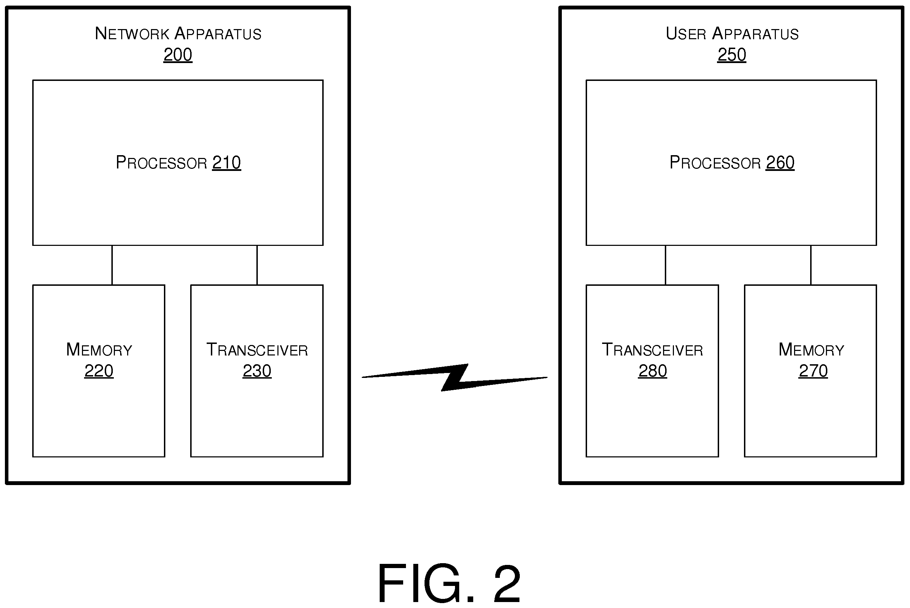

FIG. 2 illustrates an example network apparatus 200 and an example user apparatus 250 in accordance with an implementation of the present disclosure. Each of network apparatus 200 and user apparatus 250 may perform various functions to implement schemes, techniques, processes and methods described herein pertaining to enhancement for WLAN measurement in mobile communications, including the various schemes described above with respect to network environment 100 as well as methods / processes 300, 400, 500 and 600 described below.

User apparatus 250 may be a part of an electronic apparatus, which may be a UE such as a portable or mobile apparatus, a wearable apparatus, a wireless communication apparatus or a computing apparatus. For instance, user apparatus 250 may be implemented in or as a smartphone, a smartwatch, a personal digital assistant, a digital camera, or a computing equipment such as a tablet computer, a laptop computer or a notebook computer. User apparatus 250 may also be a part of a machine type apparatus, which may be an Internet-of-Things (loT) apparatus such as an immobile or a stationary apparatus, a home apparatus, a wire communication apparatus or a computing apparatus. For instance, user apparatus 250 may be implemented in a smart thermostat, a smart fridge, a smart doorlock, a wireless speaker or a home control center. Alternatively, user apparatus 250 may be implemented in the form of one or more integrated-circuit (IC) chips such as, for example and without limitation, one or more single-core processors, one or more multi-core processors, or one or more complex-instruction-set-computing (CISC) processors. User apparatus 250 may be an example implementation of UE 120 in network environment 100. User apparatus 250 may include at least some of those components shown in FIG. 2 such as a processor 260, for example. User apparatus 250 may further include one or more other components not pertinent to the proposed scheme of the present disclosure (e.g., internal power supply, display device and/or user interface device), and, thus, such component(s) of user apparatus 250 are neither shown in FIG. 2 nor described below in the interest of simplicity and brevity.

Network apparatus 200 may be a part of an electronic apparatus, which may be a network node such as a base station, a small cell, a router or a gateway. For instance, network apparatus 200 may be implemented in or as an eNodeB in a LTE, LTE-Advanced or LTE-Advanced Pro network or, alternatively, implemented in or as a gNB in a 5^{th} Generation (5G), New Radio (NR) or Internet of Things (loT) network. Alternatively, network apparatus 200 may be implemented in the form of one or more IC chips such as, for example and without limitation, one or more single-core processors, one or more multi-core processors, or one or more CISC processors. Network apparatus 200 may be an example implementation of network node 110 in network environment 100. Network apparatus 200 may include at least some of those components shown in FIG. 2 such as a processor 210, for example. Network apparatus 200 may further include one or more other components not pertinent to the proposed scheme of the present disclosure (e.g., internal power supply, display device and/or user interface device), and, thus, such component(s) of network apparatus 200 are neither shown in FIG. 2 nor described below in the interest of simplicity and brevity.

In one aspect, each of processor 210 and processor 260 may be implemented in the form of one or more single-core processors, one or more multi-core processors, or one or more CISC processors. That is, even though a singular term "a processor" is used herein to refer to processor 210 and processor 260, each of processor 210 and processor 260 may include multiple processors in some implementations and a single processor in other implementations in accordance with the present disclosure. In another aspect, each of processor 210 and processor 260 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 210 and processor 260 is a special-purpose machine specifically designed, arranged and configured to perform specific tasks pertaining to enhancement for WLAN measurement in mobile communications between a user equipment (e.g., user apparatus 250) and a network (e.g., as represented by network apparatus 200) in accordance with various implementations of the present disclosure.

In some implementations, user apparatus 250 may also include a transceiver 280 coupled to processor 260 and capable of wirelessly transmitting and receiving data. Accordingly, user apparatus 250 and network apparatus 200 may wirelessly communicate with each other via transceiver 280 and transceiver 230, respectively. In some implementations, transceiver 230 may be capable of wirelessly transmitting and receiving signals and data using a first RAT based on one or more LTE-related standards. In some implementations, transceiver 280 may be capable of wirelessly transmitting and receiving signals and data using the first RAT and at least a second RAT. For instance, transceiver 280 may be also capable of wirelessly transmitting and receiving signals and data using the second RAT, which may be based on one or more IEEE 802.11-related standards (e.g., Wi-Fi). It is noteworthy that, although examples provided herein are in the context of LTE, IEEE 802.11 and Wi-Fi, different radio access technologies may also be utilized in various implementations.

In some implementations, user apparatus 250 may further include a memory 270 coupled to processor 260 and capable of being accessed by processor 260 and storing data therein. In some implementations, network apparatus 200 may also include a transceiver 230 coupled to processor 210 and capable of wirelessly transmitting and receiving data. In some implementations, network apparatus 200 may further include a memory 220 coupled to processor 210 and capable of being accessed by processor 210 and storing data therein. Each of memory 220 and memory 270 may include a type of random access memory (RAM) such as dynamic RAM (DRAM), static RAM (SRAM), thyristor RAM (T-RAM) and/or zero-capacitor RAM (Z-RAM). Alternatively or additionally, each of memory 220 and memory 270 may include a type of read-only memory (ROM) such as mask ROM, programmable ROM (PROM), erasable programmable ROM (EPROM) and/or electrically erasable programmable ROM (EEPROM). Alternatively or additionally, each of memory 220 and memory 270 may include a type of nonvolatile random-access memory (NVRAM) such as flash memory, solid-state memory, ferroelectric RAM (FeRAM), magnetoresistive RAM (MRAM) and/or phase-change memory.

In the interest of brevity and to avoid repetition, detailed description of the capabilities and functions of each of network apparatus 200 and user apparatus 250 is provided below with respect to processes 300, 400, 500 and 600.

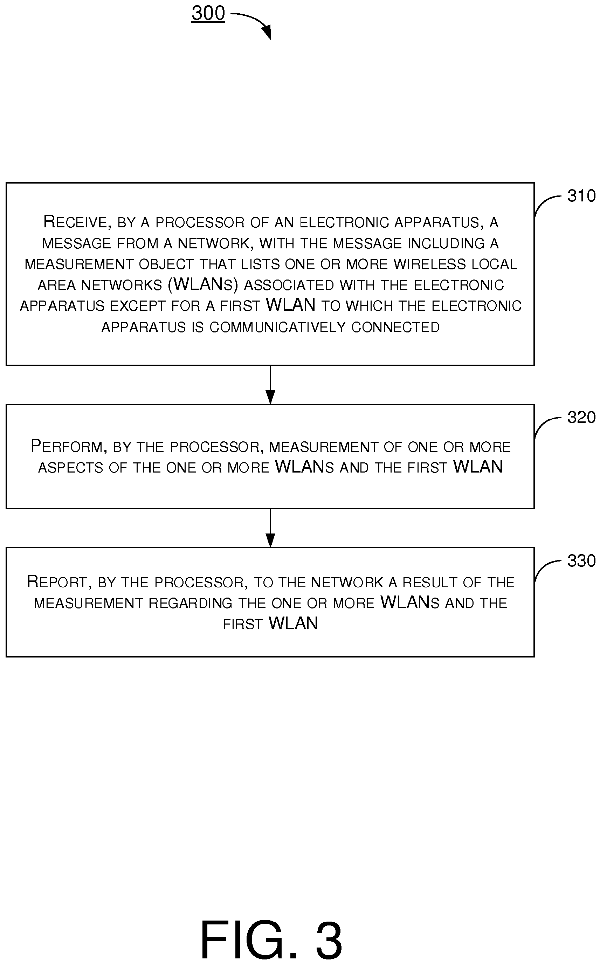

FIG. 3 illustrates an example method / process 300 in accordance with an implementation of the present disclosure. Process 300 may represent an aspect of implementing the proposed concepts and schemes such as one or more of the various schemes described above for addressing the first potential issue and/or the second potential issue. More specifically, process 300 may represent an aspect of the proposed concepts and schemes pertaining to enhancement for WLAN measurement in mobile communications. For instance, process 300 may be an example implementation of the second scheme described above for addressing the first potential issue. Process 300 may include one or more operations, actions, or functions as illustrated by one or more of blocks 310, 320 and 330. Although illustrated as discrete blocks, various blocks of process 300 may be divided into additional blocks, combined into fewer blocks, or eliminated, depending on the desired implementation. Moreover, the blocks/sub-blocks of process 300 may be executed in the order shown in FIG. 3 or, alternatively in a different order. The blocks/sub-blocks of process 300 may be executed iteratively. Process 300 may be implemented by or in apparatus 200 and/or apparatus 250 as well as any variations thereof. Solely for illustrative purposes and without limiting the scope, process 300 is described below in the context of apparatus 250 implemented as user equipment 120 in network environment 100. Process 300 may begin at block 310.

At 310, process 300 may involve processor 260 of apparatus 250 receiving, via transceiver 280, a message from apparatus 200 (e.g., network node 110 of network 105). The message may include a measurement object listing one or more WLANs (e.g., WLANs 135(2) - 135(N)) associated with apparatus 250 except for a first WLAN (e.g., WLAN 135(1)) to which apparatus 250 is communicatively connected. In some implementations, when the WLAN APs (e.g., APs 130(1) - 130(N) of WLANS 135(1) - 135(N)) are physically spread out and in more than one measurement object, each measurement object may be associated with a corresponding measurement ID. The corresponding measurement ID should also be configured for measurement. Process 300 may proceed from 310 to 320.

At 320, process 300 may involve processor 260 performing, via transceiver 280, measurement of one or more aspects of the one or more WLANs and the first WLAN. Process 300 may proceed from 320 to 330.

At 330, process 300 may involve processor 260 reporting, via transceiver 280, to apparatus 200 a result of the measurement regarding the one or more WLANs and the first WLAN.

In some implementations, in receiving the message from apparatus 200, process 300 may involve processor 260 receiving the message from apparatus 200 using a first RAT. In such cases, apparatus 250 may be communicatively connected to the first WLAN using a second RAT different from the first RAT. In some implementations, the first RAT may be based on one or more LTE-related standards, and the second RAT may be based on one or more IEEE 802.11-related standards.

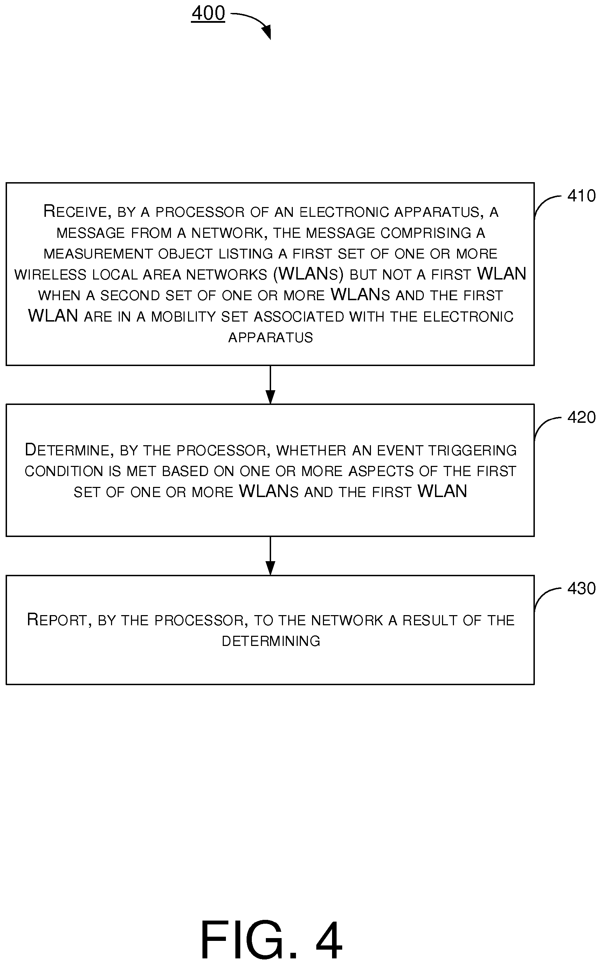

FIG. 4 illustrates an example method / process 400 in accordance with an implementation of the present disclosure. Process 400 may represent an aspect of implementing the proposed concepts and schemes such as one or more of the various schemes described above for addressing the first potential issue and/or the second potential issue. More specifically, process 400 may represent an aspect of the proposed concepts and schemes pertaining to enhancement for WLAN measurement in mobile communications. For instance, process 400 may be an example implementation of the fourth, fifth and sixth schemes described above for addressing the second potential issue. Process 400 may include one or more operations, actions, or functions as illustrated by one or more of blocks 410, 420 and 430. Although illustrated as discrete blocks, various blocks of process 400 may be divided into additional blocks, combined into fewer blocks, or eliminated, depending on the desired implementation. Moreover, the blocks/sub-blocks of process 400 may be executed in the order shown in FIG. 4 or, alternatively in a different order. The blocks/sub-blocks of process 400 may be executed iteratively. Process 400 may be implemented by or in apparatus 200 and/or apparatus 250 as well as any variations thereof. Solely for illustrative purposes and without limiting the scope, process 400 is described below in the context of apparatus 250 implemented as user equipment 120 in network environment 100. Process 400 may begin at block 410.

At 410, process 400 may involve processor 260 of apparatus 250 receiving, via transceiver 280, a message from apparatus 200 (e.g., network node 110 of network 105). The message may include a measurement object listing a first set of one or more WLANs (e.g., WLANs 135(2) - 135(N-1)) but not a first WLAN (e.g., WLAN 135(1)) when a second set of one or more WLANs (e.g., WLANs 135(2) - 135(N)) and the first WLAN are in a mobility set associated with apparatus 250. Process 400 may proceed from 410 to 420.

At 420, process 400 may involve processor 260 determining whether an event triggering condition is met based on one or more aspects of the first set of one or more WLANs and the first WLAN. Process 400 may proceed from 420 to 430.

At 430, process 400 may involve processor 260 reporting, via transceiver 280, to apparatus 200 a result of the determining.

In some implementations, in determining whether the event triggering condition is met based on the one or more aspects of the first set of one or more WLANs and the first WLAN, process 400 may involve processor 260 performing a number of operations in accordance with the fifth scheme of the present disclosure. For instance, process 400 may involve processor 260 performing measurement of the one or more aspects of the first set of one or more WLANs. Moreover, process 400 may involve processor 260 utilizing a predefined value for the one or more aspects of the first WLAN. Additionally, process 400 may involve processor 260 determining whether the event triggering condition is met based on a result of the performing with respect to the first set of one or more WLANs and a result of the utilizing with respect to the first WLAN. In some implementations, in utilizing the predefined value for the one or more aspects of the first WLAN, process 400 may involve processor 260 setting the predefined value for the one or more aspects of the first WLAN to be higher than a first threshold such that the event triggering condition is not met with respect to the first WLAN. The first threshold value may be set as a high value such as, for example and without limitation, between 0 dBm to +35 dBm. Alternatively, in utilizing the predefined value for each of the one or more aspects of the first WLAN, process 400 may involve processor 260 setting the predefined value for each of the one or more aspects of the first WLAN to be lower than a second threshold such that the event triggering condition is met with respect to the first WLAN. The second threshold value may be set as a low value such as, for example and without limitation, between -60 dBm to -95 dBm.

Alternatively, in determining whether the event triggering condition is met based on the one or more aspects of the first set of one or more WLANs and the first WLAN, process 400 may involve processor 260 performing a number of operations in accordance with the sixth scheme of the present disclosure. For instance, process 400 may involve processor 260 performing measurement of the one or more aspects of the first set of one or more WLANs. Moreover, process 400 may involve processor 260 performing measurement of the one or more aspects of the first WLAN. Furthermore, process 400 may involve processor 260 determining whether the event triggering condition is met based on a result of the measurement with respect to the first set of one or more WLANs and the first WLAN.

Alternatively, in determining whether the event triggering condition is met based on the one or more aspects of the first set of one or more WLANs and the first WLAN, process 400 may involve processor 260 a number of operations in accordance with the fourth scheme of the present disclosure. For instance, process 400 may involve processor 260 performing measurement of the one or more aspects of the first set of one or more WLANs. Additionally, process 400 may involve processor 260 determining whether the event triggering condition is met based on a result of the measurement with respect to the one or more WLANs. In some implementations, process 400 may involve processor 260 also performing measurement of the first WLAN (to which apparatus 250 is connected) but not taking a result of the measurement into consideration in determining whether the event triggering condition is met.

In some implementations, in receiving the message from apparatus 200, process 400 may involve processor 260 receiving the message from apparatus 200 using a first RAT. In such cases, the first WLAN may use a second RAT different from the first RAT. In some implementations, the first RAT may be based on one or more LTE-related standards, and the second RAT may be based on one or more IEEE 802.11-related standards.

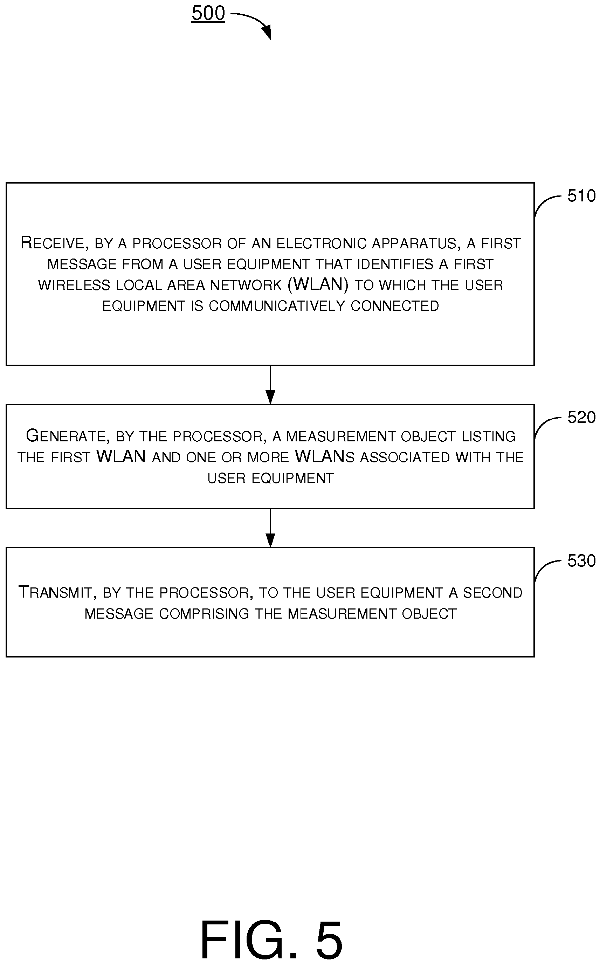

FIG. 5 illustrates an example method / process 500 in accordance with an implementation of the present disclosure. Process 500 may represent an aspect of implementing the proposed concepts and schemes such as one or more of the various schemes described above for addressing the first potential issue and/or the second potential issue. More specifically, process 500 may represent an aspect of the proposed concepts and schemes pertaining to enhancement for WLAN measurement in mobile communications. For instance, process 500 may be an example implementation of the first scheme described above for addressing the first potential issue. Process 500 may include one or more operations, actions, or functions as illustrated by one or more of blocks 510, 520 and 530. Although illustrated as discrete blocks, various blocks of process 500 may be divided into additional blocks, combined into fewer blocks, or eliminated, depending on the desired implementation. Moreover, the blocks/sub-blocks of process 500 may be executed in the order shown in FIG. 5 or, alternatively in a different order. The blocks/sub-blocks of process 500 may be executed iteratively. Process 500 may be implemented by or in apparatus 200 and/or apparatus 250 as well as any variations thereof. Solely for illustrative purposes and without limiting the scope, process 500 is described below in the context of apparatus 200 implemented as network node 110 in network environment 100. Process 500 may begin at block 510.

At 510, process 500 may involve processor 210 of apparatus 200 receiving, via transceiver 230, a first message from apparatus 250 (e.g., as UE 120) that identifies a first WLAN (e.g., WLAN 135(1)) to which the user equipment is communicatively connected. Process 500 may proceed from 510 to 520.

At 520, process 500 may involve processor 210 generating a measurement object listing the first WLAN and one or more WLANs associated with apparatus 250 (e.g., WLANs 135(2) - 135(N)). In some implementations, when the WLAN APs (e.g., APs 130(1) - 130(N) of WLANS 135(1) - 135(N)) are physically spread out and in more than one measurement object, each measurement object may be associated with a corresponding measurement ID. The corresponding measurement ID should also be configured for measurement. Process 500 may proceed from 520 to 530.

At 530, process 500 may involve processor 210 transmitting, via transceiver 230, to apparatus 250 a second message that includes the measurement object.

In some implementations, in transmitting the second message, process 500 may involve processor 210 transmitting the second message using a first RAT. In such cases, apparatus 250 may be communicatively connected to the first WLAN using a second RAT different from the first RAT. In some implementations, the first RAT may be based on one or more LTE-related standards, and the second RAT may be based on one or more IEEE 802.11-related standards.

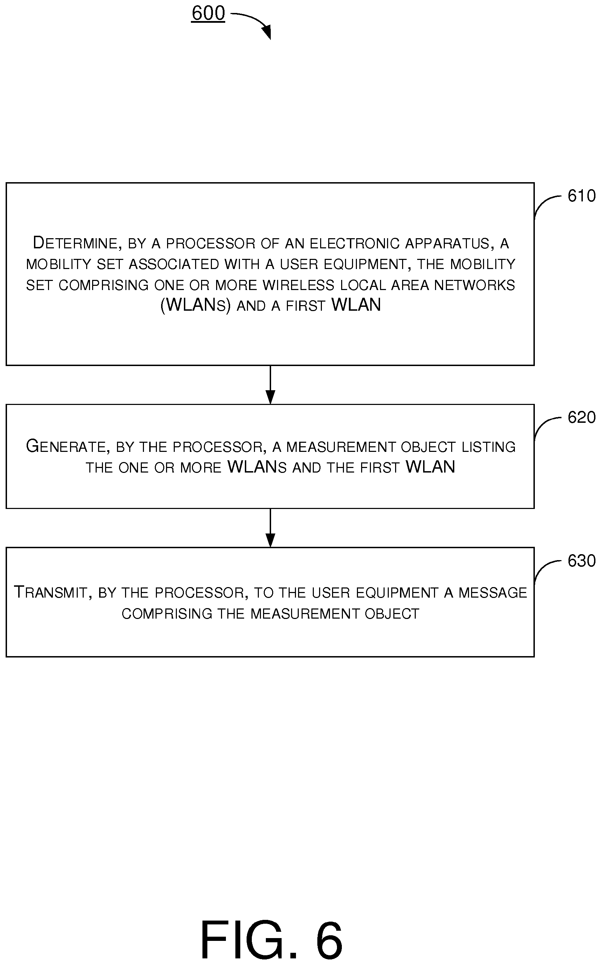

FIG. 6 illustrates an example method / process 600 in accordance with an implementation of the present disclosure. Process 600 may represent an aspect of implementing the proposed concepts and schemes such as one or more of the various schemes described above for addressing the first potential issue and/or the second potential issue. More specifically, process 600 may represent an aspect of the proposed concepts and schemes pertaining to enhancement for WLAN measurement in mobile communications. For instance, process 600 may be an example implementation of the third scheme described above for addressing the second potential issue. Process 600 may include one or more operations, actions, or functions as illustrated by one or more of blocks 610, 620 and 630. Although illustrated as discrete blocks, various blocks of process 600 may be divided into additional blocks, combined into fewer blocks, or eliminated, depending on the desired implementation. Moreover, the blocks/sub-blocks of process 600 may be executed in the order shown in FIG. 6 or, alternatively in a different order. The blocks/sub-blocks of process 600 may be executed iteratively. Process 600 may be implemented by or in apparatus 200 and/or apparatus 250 as well as any variations thereof. Solely for illustrative purposes and without limiting the scope, process 600 is described below in the context of apparatus 200 implemented as network node 110 in network environment 100. Process 600 may begin at block 610.

At 610, process 600 may involve processor 210 of apparatus 200 determining a mobility set (e.g., WLANs 135(1) - 135(N)) associated with apparatus 250 (e.g., as UE 120). The mobility set may include one or more WLANs (e.g., WLANs 135(2) - 135(N)) and a first WLAN (e.g., WLAN 135(1)), to which apparatus 250 may be communicatively connected or not connected. Process 600 may proceed from 610 to 620.

At 620, process 600 may involve processor 210 generating a measurement object listing the one or more WLANs and the first WLAN. In some implementations, when the WLAN APs (e.g., APs 130(1) - 130(N) of WLANS 135(1) - 135(N)) are physically spread out and in more than one measurement object, each measurement object may be associated with a corresponding measurement ID. The corresponding measurement ID should also be configured for measurement. Process 600 may proceed from 620 to 630.

At 630, process 600 may involve processor 210 transmitting, via transceiver 230, to apparatus 250 a message that includes the measurement object.

In some implementations, in determining the mobility set associated with apparatus 250, process 600 may involve processor 210 receiving, via transceiver 230, a message from apparatus 250 identifying the first WLAN as a WLAN to which apparatus 250 is communicatively connected.

In some implementations, in transmitting the message, process 600 may involve processor 210 transmitting the message using a first RAT. In such cases, apparatus 250 may be communicatively connected to the first WLAN using a second RAT different from the first RAT. In some implementations, the first RAT may be based on one or more LTE-related standards, and the second RAT may be based on one or more IEEE 802.11-related standards.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope and spirit of the present disclosure. Accordingly, the various implementations disclosed herein are not intended to be limiting, with the true scope and spirit being indicated by the following claims.

## Claims

1. A method (300), comprising:
receiving, by a processor (260) of an electronic apparatus (250), a message from a network (105), the message comprising a measurement object listing one or more wireless local area networks, WLANs, (135(2)-135(N)) associated with the electronic apparatus (250) except for a first WLAN (135(1)) to which the electronic apparatus is communicatively connected; and
performing, by the processor (260), measurement of one or more aspects of the one or more WLANs 135(2)-135(N)) and the first WLAN (135(1)).

2. The method of Claim 1, wherein the receiving of the message from the network comprises receiving the message from the network using a first radio access technology, RAT, wherein the electronic apparatus is communicatively connected to the first WLAN using a second RAT different from the first RAT, wherein the first RAT is based on one or more Long-Term Evolution, LTE, -related standards, and wherein the second RAT is based on one or more Institute of Electrical and Electronics Engineers, IEEE, 802.11-related standards.

3. The method of Claim 2, wherein the one or more WLANs comprise a plurality of WLANS, wherein a plurality of access points, APs, of the plurality of WLANs are physically spread out and in a plurality of measurement objects, and wherein each measurement object of the plurality of measurement objects is associated with a corresponding measurement identifier, ID, for measurement.

4. The method of Claim 1, further comprising:
reporting, by the processor, to the network a result of the measurement regarding the one or more WLANs and the first WLAN.

5. A method (400), comprising:
receiving, by a processor (260) of an electronic apparatus (250), a message from a network (105), the message comprising a measurement object listing a first set of one or more wireless local area networks, WLANs, (135(2)-135(N)) but not a first WLAN (135(1))when a second set of one or more WLANs and the first WLAN are in a mobility set associated with the electronic apparatus; and
determining, by the processor (260), whether an event triggering condition is met based on one or more aspects of the first set of one or more WLANs and the first WLAN.

6. The method of Claim 5, wherein the determining of whether the event triggering condition is met based on the one or more aspects of the first set of one or more WLANs and the first WLAN comprises:
performing measurement of the one or more aspects of the first set of one or more WLANs;
utilizing a predefined value for the one or more aspects of the first WLAN; and
determining whether the event triggering condition is met based on a result of the performing with respect to the first set of one or more WLANs and a result of the utilizing with respect to the first WLAN.

7. The method of Claim 6, wherein the utilizing of the predefined value for the one or more aspects of the first WLAN comprises setting the predefined value for the one or more aspects of the first WLAN to be higher than a first threshold such that the event triggering condition is not met with respect to the first WLAN.

8. The method of Claim 6, wherein the utilizing of the predefined value for the one or more aspects of the first WLAN comprises setting the predefined value for the one or more aspects of the first WLAN to be lower than a second threshold such that the event triggering condition is met with respect to the first WLAN.

9. The method of Claim 5, wherein the determining of whether the event triggering condition is met based on the one or more aspects of the first set of one or more WLANs and the first WLAN comprises:
performing measurement of the one or more aspects of the first set of one or more WLANs;
performing measurement of the one or more aspects of the first WLAN; and
determining whether the event triggering condition is met based on a result of the measurement with respect to the first set of one or more WLANs and the first WLAN.

10. The method of Claim 5, wherein the determining of whether the event triggering condition is met based on the one or more aspects of the first set of one or more WLANs and the first WLAN comprises:
performing measurement of the one or more aspects of the first set of one or more WLANs; and
determining whether the event triggering condition is met based on a result of the measurement with respect to the first set of one or more WLANs.

11. The method of Claim 5, further comprising:
reporting, by the processor, to the network a result of the determining.

12. A method (500), comprising:
receiving, by a processor (210) of an electronic apparatus (200), a first message from a user equipment that identifies a first wireless local area network, WLAN, (135(1)) to which the user equipment is communicatively connected;
generating, by the processor (210), a measurement object listing the first WLAN and one or more WLANs (135(2)-135(N) associated with the user equipment; and
transmitting, by the processor (210), to the user equipment a second message comprising the measurement object.

13. The method of Claim 11, wherein the transmitting of the second message comprises transmitting the second message using a first radio access technology (RAT), and wherein the user equipment is communicatively connected to the first WLAN using a second RAT different from the first RAT.

14. A method (600), comprising:
determining, by a processor (210) of an electronic apparatus (200), a mobility set associated with a user equipment, the mobility set comprising one or more wireless local area networks, WLANs, (135(2)-135(N)) and a first WLAN (135(1));
generating, by the processor (210), a measurement object listing the one or more WLANs and the first WLAN; and
transmitting, by the processor (210), to the user equipment a message comprising the measurement object.

15. The method of Claim 14, wherein the determining of the mobility set associated with the user equipment comprises receiving a message from the user equipment identifying the first WLAN as a WLAN to which the user equipment is communicatively connected.
